# EUROPÄISCHE PATENTSCHRIFT

(11) **EP 4 256 548 B1**
(45) Veröffentlichungstag und Bekanntmachung des Hinweises auf die Patenterteilung: **20.08.2025**
(21) Anmeldenummer: 21793896.8
(22) Anmeldetag: 12.10.2021
(51) Int. Cl.: G08G 1/16, B60W 30/16, B60W 50/14, B60Q 1/52, B60W 60/00, B60W 30/18

(54) **VERFAHREN ZUM BETRIEB EINES AUTOMATISIERT FAHRENDEN FAHRZEUGES**
METHOD FOR OPERATING A SELF-DRIVING VEHICLE
PROCÉDÉ DE FONCTIONNEMENT D'UN VÉHICULE AUTONOME

(30) Priorität: 07.12.2020 DE 102020007444
(43) Veröffentlichungstag der Anmeldung: 11.10.2023
(73) Patentinhaber: Mercedes-Benz Group AG, 70372 Stuttgart (DE)
(72) Erfinder: KELLER, Christoph, 70176 Stuttgart (DE); MIELENZ, Holger, 73760 Ostfildern (DE)
(74) Vertreter: Novagraaf Group
(86) Internationale Anmeldenummer: PCT/EP2021/078189
(87) Internationale Veröffentlichungsnummer: WO 2022/122223

(56) Entgegenhaltungen:
- DE-A1- 102005 062 275
- DE-A1- 102014 013 544
- DE-A1- 102017 003 440
- DE-A1- 102018 009 650

## Beschreibung

Die Erfindung betrifft ein Verfahren zum Betrieb eines Fahrzeuges gemäß dem Oberbegriff des Patentanspruchs 1.

Aus der DE 10 2009 017 431 A1 ist ein Fahrunterstützungssystem für Fahrzeuge bekannt. Das Fahrunterstützungssystem umfasst eine Informationserfassungseinrichtung für ein vorausfahrendes Fahrzeug, um eine Information über ein vorausfahrendes Fahrzeug zu detektieren. Weiterhin umfasst das Fahrunterstützungssystem eine Informationserfassungseinrichtung für ein nachfolgendendes Fahrzeug, um eine Information über ein nachfolgendes Fahrzeug zu detektieren. Zudem ist eine Berechnungseinrichtung für ein frontseitiges Kollisionsrisiko vorgesehen, um ein frontseitiges Kollisionsrisiko gegenüber dem vorausfahrenden unter Berücksichtigung von mindestens einem Parameter einer Relativgeschwindigkeit zwischen dem vorausfahrenden Fahrzeug und dem betreffenden Fahrzeug zu berechnen. Darüber hinaus umfasst das Fahrunterstützungssystem eine Berechnungseinrichtung für ein heckseitiges Kollisionsrisiko, um ein heckseitiges Kollisionsrisiko durch das nachfolgende Fahrzeug unter Berücksichtigung von mindestens einem Parameter einer Relativgeschwindigkeit zwischen dem nachfolgenden Fahrzeug und dem betreffenden Fahrzeug mit einem größeren Gewicht als dem Gewicht des Parameters der Relativgeschwindigkeit bei dem frontseitigen Kollisionsrisiko gegenüber dem vorausfahrenden Fahrzeug zu berechnen. Das Fahrunterstützungssystem weist zudem eine Steuereinheit zum Ausführen einer Fahrsteuerung in Abhängigkeit von dem frontseitigen Kollisionsrisiko gegenüber dem vorausfahrenden Fahrzeug und dem heckseitigen Kollisionsrisiko durch das nachfolgende Fahrzeug auf.

Aus der DE 10 2018 009 650 A1 ist ein Verfahren zum Betrieb einer Warnblinkanlage eines Fahrzeugs bekannt. Dabei ist vorgesehen, dass die Warnblinkanlage bei Annäherung des Fahrzeuges an ein Stauende automatisch aktiviert wird, wenn erfasst wird, dass dem Fahrzeug kein weiteres Fahrzeug auf seiner Fahrspur unmittelbar folgt, wobei die Warnblinkanlage automatisch deaktiviert wird, wenn eine auf einen Fahrspurwechsel hinweisende Lenkbewegung des Fahrzeugs erfasst wird und ein Fahrtrichtungsanzeiger aktiviert wird, und dass die Warnblinkanlage erneut automatisch aktiviert wird, wenn Fahrspurwechsel erfolgt ist und der Fahrtrichtungsanzeiger deaktiviert ist.

Aus der DE 10 2014 013 544 A1 ist ein Verfahren zum Betrieb eines Abstandsregelsystems für ein Fahrzeug bekannt, bei dem eine Längsregelung des Fahrzeugs auf Basis eines Sollabstandes zu einem sich auf einem gleichen Fahrstreifen voraus befindenden vorderen Fahrzeug erfolgt. Dabei ist vorgesehen, dass der Sollabstand vergrößert wird, wenn ein sich auf dem gleichen Fahrstreifen von hinten an das Fahrzeug annäherndes hinteres Fahrzeug erkannt wird und aufgrund der Dynamik der Fahrzeuge eine Heckkollision zwischen dem Fahrzeug und dem hinteren Fahrzeug prädiziert wird.

Aus der DE 10 2017 003 440 A1 ist ein Verfahren zum Betrieb eines Fahrzeugs bekannt, bei dem vorgesehen ist, dass ein Relativabstand und eine Relativgeschwindigkeit zu einem dem Fahrzeug auf derselben Fahrspur nachfolgenden Folgefahrzeug ermittelt werden und dass eine heckseitige Leuchte mit Blinkfunktion selbsttätig aktiviert wird, wenn die Relativgeschwindigkeit eine vorgegebene Maximal-Annäherungsgeschwindigkeit überschreitet und/oder wenn der Relativabstand einen vorgegebenen sicheren Mindestabstand unterschreitet.

Der Erfindung liegt die Aufgabe zugrunde, ein Verfahren zum Betrieb eines automatisiert fahrenden Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Das erfindungsgemäße Verfahren zum Betrieb eines automatisiert fahrenden Fahrzeuges sieht vor, dass bei einem erfassten, dem Fahrzeug vorausliegenden Stau ermittelt wird, ob eine Warnblinkanlage eines dem Fahrzeug auf seiner Fahrspur nachfolgenden Fahrzeuges eingeschaltet ist, dass bei eingeschalteter Warnblinkanlage des nachfolgenden Fahrzeuges ein heckseitiges Kollisionsrisiko niedriger bewertet wird als bei ausgeschalteter Warnblinkanlage und dass bei eingeschalteter Warnblinkanlage des nachfolgenden Fahrzeuges ein Abstand des Fahrzeuges zu einem vorausfahrenden Fahrzeug vergrößert wird.

Das Verfahren stellt eine optimierte Lösung für ein im automatisierten Fahrbetrieb auf ein Stauende zufahrendes Fahrzeug dar, wodurch eine Verkehrssicherheit erhöht und eine Kollisionsgefahr abgeschätzt werden kann. Dabei wird eine Bremsbereitschaft des nachfolgenden Fahrzeuges, welche anhand der eingeschalteten Warnblinkanlage erkannt wird, genutzt, um ein Kollisionsrisiko in Bezug auf ein ein Stauende bildendes vorausfahrendes Fahrzeug zu verringern.

Da das Fahrzeug den vorausliegenden Stau erkennt, kann eine Verzögerung des Fahrzeuges entsprechend vorausschauend eingeleitet werden, so dass ein Komfort für Insassen des Fahrzeuges erhöht werden kann.

In einer Ausführung des Verfahrens wird der Stau anhand aktivierter Bremsleuchten und/oder eingeschalteter Warnblinkanlagen vorausfahrender Fahrzeuge detektiert, wodurch ein Stau im Wesentlichen zuverlässig erkannt werden kann, so dass im nächsten Schritt ermittelt wird, ob das nachfolgende Fahrzeug seine Warnblinkanlage einschaltet und dementsprechend ein Kollisionsrisiko bewertet wird. Alternativ oder zusätzlich kann der Stau, insbesondere das Stauende auch anhand anderer geeigneter Informationen, beispielsweise anhand von Relativgeschwindigkeiten und/oder Abstandsänderungen detektiert werden.

Dadurch, dass bei eingeschalteter Warnblinkanlage des nachfolgenden Fahrzeuges der Abstand des Fahrzeuges zu dem vorausfahrenden Fahrzeug vergrößert wird, kann das Kollisionsrisiko einer Frontalkollision des Fahrzeuges mit dem vorausfahrenden Fahrzeug weitestgehend ausgeschlossen werden.

Darüber hinaus sieht das Verfahren vor, dass bei nichteingeschalteter Warnblinkanlage des nachfolgenden Fahrzeuges das Fahrzeug seinen Abstand zu einem vorausfahrenden Fahrzeug verringert, so dass eine Beschleunigung des Fahrzeuges bei einer Heckkollision durch das nachfolgende Fahrzeug möglichst gering ist und wirkende Kollisionskräfte durch Verformung absorbiert werden.

Vorzugsweise wird der Abstand zum vorausfahrenden Fahrzeug als Zeitlücke definiert. Unter Zeitlücke ist dabei eine Zeitspanne zu verstehen, in der zwei aufeinander folgende Fahrzeuge, einen bestimmten Punkt passieren. Insbesondere entspricht die Zeitlücke der Zeitspanne, die das Fahrzeug benötigt, um die freie Strecke zum vorausfahrenden Fahrzeug zu durchfahren. Der Abstand zum vorausfahrenden Fahrzeug 3 ist somit ein zeitlicher Abstand.

In einer weiteren Ausführung werden Insassen des Fahrzeuges optisch und/oder akustisch in Bezug auf den Stau informiert, so dass diese über eine gegebenenfalls eintretende kritische Situation und/oder über einen eventuellen Zeitverzug ihrer Reise in Kenntnis gesetzt sind. In Bezug auf die kritische Situation und dadurch, dass die Insassen über die vorliegende Situation informiert wurden, können die Insassen eine aufrechte Position einnehmen, so dass eine Rückhaltewirkung von Insassenschutzmitteln bei einem Eintritt einer Heckkollision und/oder einer Frontalkollision vorkonditioniert sind.

Darüber hinaus werden die Insassen in einer möglichen Weiterbildung optisch und/oder akustisch über ein eventuell eintretendes abruptes Bremsmanöver des Fahrzeuges informiert, so dass die Insassen eine in Bezug auf die Insassenschutzmittel optimierte Sitzhaltung einnehmen können.

Vorzugsweise wird bei Erfassung des Staus eine Warnblinkanlage des Fahrzeugs eingeschaltet. Dadurch wird der nachfolgende Verkehr über das eventuell eintretende abrupte Bremsmanöver des Fahrzeugs informiert.

Ausführungsbeispiele der Erfindung werden im Folgenden anhand von Zeichnungen näher erläutert.

Dabei zeigen:
- Fig. 1: schematisch ein auf ein Stauende zufahrendes Fahrzeug und ein diesem nachfolgendes Fahrzeug und
- Fig. 2: schematisch einen Ablauf eines Verfahrens zum Betrieb eines automatisiert fahrenden Fahrzeuges einem diesen vorausliegenden Stau.

Einander entsprechende Teile sind in allen Figuren mit den gleichen Bezugszeichen versehen.

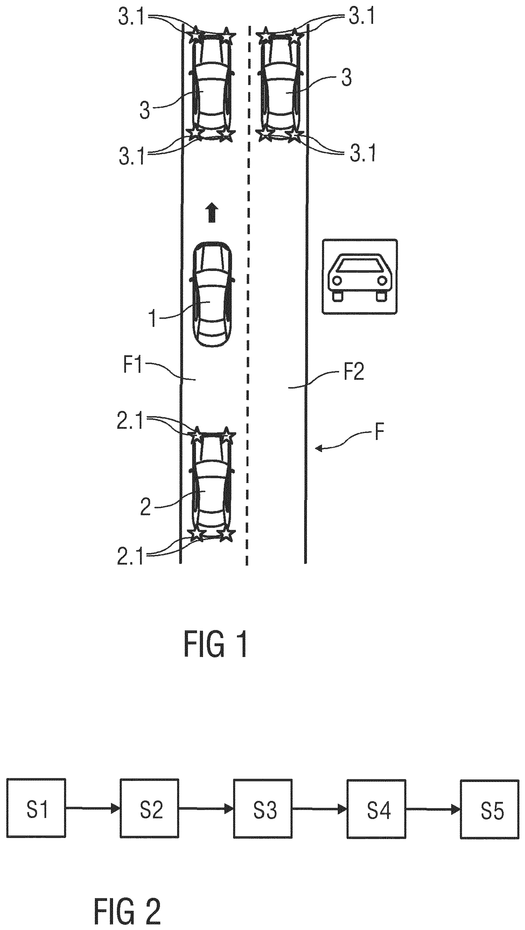

Figur 1 zeigt einen Fahrbahnabschnitt F mit zwei in dieselbe Richtung verlaufenden Fahrspuren F1, F2, wobei ein Fahrzeug 1 auf einer linken Fahrspur F1 auf ein Stauende zufährt und sich hinter dem Fahrzeug 1 auf derselben Fahrspur F1 ein nachfolgendes Fahrzeug 2 befindet.

Das Stauende bilden zwei vorausfahrende Fahrzeuge 3, die, um auf das Stauende hinzuweisen, jeweils ihre Warnblinkanlage 3.1 eingeschaltet haben.

Das auf das Stauende zufahrende Fahrzeug 1 fährt im automatisierten Fahrbetrieb, wobei eine Fahraufgabe vollumfänglich von dem Fahrzeug 1 selbst ausgeführt wird. Beispielsweise handelt es sich bei dem Fahrzeug 1 um ein sogenanntes Robotaxi oder einen sogenannten Robotruck.

Um weitestgehend sicherzustellen, dass das autonom fahrende Fahrzeug 1 auf die gleiche Weise reagiert, wie ein manuell betriebenes, auf ein Stauende zufahrendes Fahrzeug und ein bestehendes Kollisionsrisiko oder zumindest eine Kollisionsschwere in Bezug auf das nachfolgende Fahrzeug 1 und die vorausfahrenden Fahrzeuge 3 zumindest zu verringern ist ein im Folgenden und anhand eines in Figur 2 dargestellten Ablaufes beschriebenes Verfahren vorgesehen.

In einer solchen in Figur 1 dargestellten Verkehrssituation, die auch als Gefahrensituation bezeichnet werden kann, ist es Ziel, sowohl eine Heckkollision durch das nachfolgende Fahrzeug 2 als auch eine Frontalkollision zwischen dem Fahrzeug 1 und dem auf seiner Fahrspur F1 vorausfahrenden Fahrzeug 3 zu vermeiden.

Dies kann dazu führen, dass ein Zielabstand des Fahrzeuges 1 zu dem vorausfahrenden Fahrzeug 3 vergleichsweise gering gewählt wird, wenn gleichzeitig die Heckkollision durch das nachfolgende Fahrzeug 2 vermieden werden soll.

Das Verfahren sieht vor, dass in einem ersten Verfahrensschritt S1 anhand erfasster Signale von Sensoren einer Umgebungssensorik des Fahrzeuges 1 ein diesem vorausliegender Stau erkannt wird.

Insbesondere weist die Umgebungssensorik zumindest einen radarbasierten Sensor auf, welcher im Fahrbetrieb des Fahrzeuges 1 fortlaufend Signale erfasst, anhand derer beispielsweise die vorausfahrenden Fahrzeug 3 sowie Parameter einer Straßengeometrie ermittelt werden.

Zudem kann die Umgebungssensorik zumindest einen lidarbasierten Sensor aufweisen, welcher ebenfalls zur Detektion zumindest der vorausfahrenden Fahrzeuge 3 und der Parameter der Straßengeometrie vorgesehen ist.

Weiterhin umfasst die Umgebungssensorik zumindest eine Kamera, die im Fahrbetrieb des Fahrzeuges 1 fortlaufend Bildsignale erfasst, die dahingehend ausgewertet werden, dass die vorausfahrenden Fahrzeuge 3 und die Parameter der Straßengeometrie ermittelt werden, wobei zudem anhand der Bildsignale ermittelt wird, dass die beiden vorausfahrenden Fahrzeuge 3 jeweils ihre Warnblinkanlage 3.1 aktiviert haben.

Mittels zumindest eines geeigneten Sensors und/oder mittels einer geeigneten Kamera der Umgebungssensorik wird anhand entsprechend erfasster Signale und/oder Bilddaten ermittelt, dass sich hinter dem Fahrzeug 1 ein nachfolgendes Fahrzeug 2 befindet.

Die erfassten Signale und Bildsignale der Sensoren sowie der Kamera werden in einem zweiten Verfahrensschritt S2 fusioniert, wobei anhand der Fusion ermittelt wird, dass sich hinter dem Fahrzeug 1 ein nachfolgendes Fahrzeug 2 mit eingeschalteter Warnblinkanlage 2.1 und vor dem Fahrzeug 1 vorausfahrende Fahrzeuge 3 mit eingeschalteter Warnblinkanlage 3.1 befinden.

Zudem wird anhand der Fusion eine Straßengeometrie um das Fahrzeug 1 herum ermittelt und mittels einer digitalen Straßenkarte vorliegende Daten einer Straßentopologie des Fahrbahnabschnittes F herangezogen.

In einem dritten Verfahrensschritt S3 wird ein Umgebungsmodell erstellt, welches Beziehungen zwischen den Fahrzeugen 1 bis 3 und dem Fahrbahnabschnitt F berücksichtigt.

Ein vierter Verfahrensschritt S4 bezieht sich auf Planen und Entscheiden, wobei anhand der vorausfahrenden Fahrzeuge 3 und insbesondere anhand der eingeschalteten Warnblinkanlagen 3.1 eine Stausituation ermittelt wird, auf welche das Fahrzeug 1 zufährt.

Des Weiteren ist in Bezug auf den vierten Verfahrensschritt S4 vorgesehen, dass beabsichtigt wird, Insassen des Fahrzeuges 1 über die vorliegende Stausituation und ein möglicherweise abrupteres Bremsmanöver zu informieren. Dadurch haben die Insassen die Möglichkeit, sich auf ein solches Bremsmanöver vorzubereiten und sich gegebenenfalls aufrecht hinzusetzen, um eine Rückhaltewirkung von Insassenschutzmitteln zu optimieren.

Zudem wird geplant, eine Warnblinkanlage des Fahrzeuges 1 einzuschalten, um einen nachfolgenden Verkehr auf die Stausituation, insbesondere das Stauende aufmerksam zu machen.

Weiterhin wird geplant zu ermitteln, ob das nachfolgende Fahrzeug 2 seine Warnblinkanlage 2.1 eingeschaltet hat, so dass eine Wahrscheinlichkeit, dass ein Fahrzeugnutzer des nachfolgenden Fahrzeuges 2 in Bezug auf den vorausliegenden Stau informiert ist, vergleichsweise hoch ist. Ferner ist, sofern das nachfolgende Fahrzeug 2 seine Warnblinkanlage 2.1 eingeschaltet hat, eine Wahrscheinlichkeit, dass das nachfolgende Fahrzeug 2 seine momentane Fahrgeschwindigkeit mit einer höheren Verzögerung verringert, ohne dass das Risiko eines Auffahrunfalles zwischen dem nachfolgenden Fahrzeug 2 und dem Fahrzeug 1 besteht, ebenfalls vergleichsweise hoch, wenn die Warnblinkanlage 2.1 eingeschaltet ist.

In einem fünften Verfahrensschritt S5 werden die Insassen des Fahrzeuges 1, wie im vierten Verfahrensschritt S4 geplant wurde, mittels Ausgabe eines akustischen und/oder optischen Signals darüber informiert, dass das Fahrzeug 1 seine momentane Fahrgeschwindigkeit ändert, insbesondere stärker verringert.

Dem geht voraus, dass das Fahrzeug 1 eine Deklarationstrajektorie für eine Annäherung an das durch die beiden vorausfahrenden Fahrzeuge 3 gebildete Stauende berechnet, wobei angenommen wird, dass das nachfolgende Fahrzeug 2 auf eine höhere Verzögerung des Fahrzeuges 1 reagiert, ohne dass die Gefahr einer Heckkollision für das Fahrzeug 1 besteht.

Zudem schaltet das Fahrzeug 1 seine nicht näher dargestellte Warnblinkanlage ein und eine Änderung seiner momentanen Fahrgeschwindigkeit wird eingeleitet. Dazu werden die Insassen informiert, dass ein eingeleitetes Bremsmanöver möglicherweise stärker sein kann als ein sogenanntes Komfortbremsen.

Wird also anhand der eingeschalteten Warnblinkanlage 2.1 des nachfolgenden Fahrzeuges 2 ermittelt, dass dieser bremsbereit ist, kann das Fahrzeug 1 seinen Zielabstand zu dem vorausfahrenden Fahrzeug 3 auf seiner Fahrspur F1 vergrößern, um ein Kollisionsrisiko mit dem vorausfahrenden Fahrzeug 3 zu verringern. Es wird also eine Bremsbereitschaft des nachfolgenden Fahrzeuges 2 dazu genutzt, das Kollisionsrisiko mit dem vorausfahrenden Fahrzeug 3 zu verringern. Der Zielabstand, ist dabei ein SollAbstand, den das Fahrzeug 2 zum vorausfahrenden Fahrzeug 3 einhalten soll. Die Einhaltung des Zielabstands wird beispielsweise mittels einer Abstandsregelung realisiert, die den Abstand des Fahrzeugs 1 zum vorausfahrenden Fahrzeug 3 auf den Zielabstand regelt. Vorteilhafterweise wird der Zielabstand als Soll-Zeitlücke definiert. Unter Zeitlücke ist dabei eine Zeitspanne zu verstehen ist, die das Fahrzeug 1 benötigt, um die momentane freie Strecke zwischen dem Fahrzeug 1 und dem vorausfahrenden Fahrzeug 3 zu durchfahren. Bei eingeschalteter bzw. nichteingeschalteter Warnblinkanlage 2.1 des nachfolgenden Fahrzeugs 2 wird also die Zeitlücke zum vorausfahrenden Fahrzeug 3 vergrößert bzw. verringert.

## Patentansprüche

1. Verfahren zum Betrieb eines Fahrzeuges (1), wobei
- bei einem erfassten, dem Fahrzeug (1) vorausliegenden Stau ermittelt wird, ob eine Warnblinkanlage (2.1) eines dem Fahrzeug (1) auf seiner Fahrspur (F1) nachfolgenden Fahrzeuges (2) eingeschaltet ist,
**dadurch gekennzeichnet,**
- **dass** das Fahrzeug (1) automatisiert fährt,
- **dass** bei eingeschalteter Warnblinkanlage (2.1) des nachfolgenden Fahrzeuges (2) ein heckseitiges Kollisionsrisiko niedriger bewertet wird als bei ausgeschalteter Warnblinkanlage (2.1) und
- **dass** bei eingeschalteter Warnblinkanlage (2.1) des nachfolgenden Fahrzeuges (2) das Fahrzeug (1) seinen Abstand zu einem vorausfahrenden Fahrzeug (3) vergrößert.

2. Verfahren nach Anspruch 1,
**dadurch gekennzeichnet, dass**
der Stau anhand aktivierter Bremsleuchten und/oder eingeschalteter Warnblinkanlagen (3.1) vorausfahrender Fahrzeuge (3) detektiert wird.

3. Verfahren nach einem der vorhergehenden Ansprüche,
**dadurch gekennzeichnet, dass**
bei nichteingeschalteter Warnblinkanlage (2.1) des nachfolgenden Fahrzeuges (2) das Fahrzeug (1) seinen Abstand zu einem vorausfahrenden Fahrzeug (3) verringert.

4. Verfahren nach Anspruch 3,
**dadurch gekennzeichnet, dass**
der Abstand zum vorausfahrenden Fahrzeug (3) als Zeitlücke definiert ist.

5. Verfahren nach einem der vorhergehenden Ansprüche,
**dadurch gekennzeichnet, dass**
Insassen des Fahrzeuges (1) optisch und/oder akustisch in Bezug auf den Stau informiert werden.

6. Verfahren nach einem der vorhergehenden Ansprüche,
**dadurch gekennzeichnet, dass**
Insassen des Fahrzeuges (1) optisch und/oder akustisch über ein eventuell eintretendes abruptes Bremsmanöver des Fahrzeuges (1) informiert werden.

7. Verfahren nach einem der vorherigen Ansprüche,
**dadurch gekennzeichnet, dass**
bei Erfassung des dem Fahrzeug (1) vorausliegenden Staus eine Warnblinkanlage des Fahrzeuges (1) eingeschaltet wird.

## Claims

1. Method for operating a vehicle (1),
- it being determined, if a traffic jam ahead of the vehicle (1) is detected, whether the hazard warning lights (2.1) of a vehicle (2) following the vehicle (1) in its lane (F1) are switched on,
**characterized**
- **in that** the vehicle (1) drives automatically,
- **in that** when the hazard warning lights (2.1) of the following vehicle (2) are switched on, a rear-end collision risk is assessed as lower than when the hazard warning lights (2.1) are switched off, and
- **in that** when the hazard warning lights (2.1) of the following vehicle (2) are switched on, the vehicle (1) increases its distance from a vehicle (3) in front.

2. Method according to claim 1,
**characterized in that**
the traffic jam is detected by means of activated brake lights and/or switched-on hazard warning lights (3.1) of vehicles (3) in front.

3. Method according to either of the preceding claims,
**characterized in that**
if the hazard warning lights (2.1) of the following vehicle (2) are not switched on, the vehicle (1) reduces its distance from the vehicle (3) in front.

4. Method according to claim 3,
**characterized in that**
the distance from the vehicle (3) in front is defined as a time gap.

5. Method according to any of the preceding claims,
**characterized in that**
occupants of the vehicle (1) are informed visually and/or acoustically about the traffic jam.

6. Method according to any of the preceding claims,
**characterized in that**
occupants of the vehicle (1) are informed visually and/or acoustically of a potentially occurring abrupt braking maneuver of the vehicle (1).

7. Method according to any of the preceding claims,
**characterized in that**
when the traffic jam ahead of the vehicle (1) is detected, the hazard warning lights of the vehicle (1) are switched on.

## Revendications

1. Procédé permettant de faire fonctionner un véhicule (1), dans lequel
- lorsqu'un embouteillage détecté précédant le véhicule (1) est capturé, il est déterminé si des feux de détresse (2.1) d'un véhicule (2) qui suit le véhicule (1) sur sa voie de circulation (F1) sont allumés,
**caractérisé en ce**
- **que** le véhicule (1) conduit de manière automatisée,
- **que,** lorsque les feux de détresse (2.1) du véhicule (2) qui suit sont allumés, un risque de collision à l'arrière est évalué plus bas que lorsque les feux de détresse (2.1) sont éteints, et
- **que,** lorsque les feux de détresse (2.1) du véhicule (2) qui suit sont allumés, le véhicule (1) augmente sa distance par rapport à un véhicule (3) qui précède.

2. Procédé selon la revendication 1,
**caractérisé en ce que**
l'embouteillage est détecté à l'aide des feux de stop activés et/ou des feux de détresse (3.1) allumés des véhicules (3) qui précèdent.

3. Procédé selon l'une des revendications précédentes,
**caractérisé en ce que**
lorsque les feux de détresse (2.1) du véhicule (2) qui suit ne sont pas allumés, le véhicule (1) réduit sa distance par rapport à un véhicule (3) qui précède.

4. Procédé selon la revendication 3,
**caractérisé en ce que**
la distance par rapport au véhicule (3) qui précède est définie comme un intervalle de temps.

5. Procédé selon l'une des revendications précédentes,
**caractérisé en ce que**
des occupants du véhicule (1) sont informés de l'embouteillage de manière optique et/ou acoustique.

6. Procédé selon l'une des revendications précédentes,
**caractérisé en ce que**
des occupants du véhicule (1) sont informés d'une éventuelle manœuvre de freinage brusque du véhicule (1) de manière optique et/ou acoustique.

7. Procédé selon l'une des revendications précédentes,
**caractérisé en ce que**
lors de la capture de l'embouteillage précédant le véhicule (1), des feux de détresse du véhicule (1) sont allumés.
